# NEUE EUROPÄISCHE PATENTSCHRIFT

(11) **EP 2 176 354 B2**
(45) Veröffentlichungstag und Bekanntmachung des Hinweises auf die Entscheidung über den Einspruch: **09.11.2016**
(45) Hinweis auf die Patenterteilung: 17.04.2013
(21) Anmeldenummer: 08785472.5
(22) Anmeldetag: 08.08.2008
(51) Int. Cl.: C08L 97/02, C08H 8/00, B27N 1/00

(54) **VERFAHREN ZUR VERMINDERUNG DER EMISSION VON ALDEHYDEN UND FLÜCHTIGEN ORGANISCHEN VERBINDUNGEN AUS HOLZWERKSTOFFEN**
METHOD FOR REDUCING THE EMISSION OF ALDEHYDES AND VOLATILE ORGANIC COMPOUNDS OF WOOD MATERIAL
PROCÉDÉ DE RÉDUCTION DES ÉMISSIONS D'ALDÉHYDES ET DE COMPOSÉS ORGANIQUES VOLATILS À PARTIR DE MATÉRIAUX DÉRIVÉS DU BOIS

(30) Priorität: 10.08.2007 DE 102007038041
(43) Veröffentlichungstag der Anmeldung: 21.04.2010
(73) Patentinhaber: SWISS KRONO Tec AG, 6004 Luzern (CH)
(72) Erfinder: GRUNWALD, Dirk, 38108 Braunschweig (DE); HASCH, Joachim, 10317 Berlin (DE)
(74) Vertreter: Kröncke, Rolf
(86) Internationale Anmeldenummer: PCT/EP2008/006584
(87) Internationale Veröffentlichungsnummer: WO 2009/021702

(56) Entgegenhaltungen:
- EP-A- 0 367 389
- EP-A1- 1 900 788
- EP-A1- 2 142 348
- EP-A2- 0 206 269
- EP-A2- 0 251 081
- WO-A-02/072323
- WO-A-2007/012350
- WO-A1-93/25358
- WO-A1-2007/004507
- WO-A1-2008/129048
- DE-A1- 3 222 195
- DE-A1- 3 427 694
- US-A- 3 248 403
- US-A- 4 409 375
- US-A- 5 578 371
- US-A1- 2002 168 471
- US-B1- 6 420 034

## Beschreibung

Die vorliegende Erfindung betrifft Verfahren zur Herstellung von Holzwerkstoffen aus lignocellulosehaltigen Zerkleinerungsprodukten, wobei diese Holzwerkstoffe eine verminderte Emission von flüchtigen organischen Verbindungen (VOC) und hierbei insbesondere von Aldehyden, aber auch Formaldehyd aufweisen. Genauer betrifft die vorliegende Erfindung Verfahren zur Herstellung von Holzwerkstoffen mit verminderter Emission an flüchtigen organischen Verbindungen und gegebenenfalls Formaldehyd, wobei eine bestimmte Kombination von Verbindungen eingesetzt wird, die die Emission von flüchtigen organischen Verbindungen und Formaldehyd aus dem hergestellten Holzwerkstoff verhindern. Weiterhin betrifft die vorliegende Erfindung mit diesem Verfahren herstellbare Holzwerkstoffe, insbesondere OSB-Platten, Spanplatten und MDF-Platten.

### Stand der Technik

Lignocellulose oder lignocellulosehaltige Materialien, wie Holz und Holzzerkleinerungsprodukte und daraus hergestellte Holzwerkstoffe, wie Holzwerkstoffplatten, enthalten unter anderem flüchtige organische Verbindungen (VOC) und sehr flüchtigen organischen Verbindungen (VVOC), wie Formaldehyd. Als flüchtige organische Verbindungen werden alle flüchtigen organischen Stoffe subsumiert, deren Retentionszeit im Gaschromatogramm zwischen C6 (Hexan) und C16 (Hexadecan) liegt. Zu den sehr flüchtigen organischen Verbindungen werden unter anderem auch Ameisensäure und Formaldehyd gezählt. Der Ausdruck Aldehyde, wie er vorliegend verwendet wird, umfasst nicht nur die flüchtigen Verbindungen, sondern auch alle anderen Aldehyde, insbesondere Formaldehyd, wenn nicht anders ausgeführt.

Flüchtige organische Verbindungen und sehr flüchtige organische Verbindungen kommen in Abhängigkeit von der Art und dem Zustand der Lignocellulosen, wie der Holzart, der Lagerungsdauer, den Lagerungsbedingungen des Holzes bzw. der Zerkleinerungsprodukte der Lignocellulosen, in unterschiedlichen chemischen Zusammensetzung und Mengen vor. Die VOCs entstammen dabei im Wesentlichen aus Extraktstoffen der Lignocellulosen, z.B. des Holzes oder Umwandlungsprodukten. Prominente Vertreter hiervon sind Stoffe wie alpha-Pinen, beta-Pinen, delta-3-Caren. Vor allem im Holz der Nadelbäume finden sich diese Bestandteile wieder. Umwandlungsprodukte, die z.B. während der Lagerung und der Bearbeitung des Holzes und der Zerkleinerungsprodukte auftreten, sind z.B. Pentanal und Hexanal. Vor allem Nadelhölzer, aus denen vorwiegend Spanplatten, mitteldichte Faserplatten (MDF) oder OSB-Platten hergestellt werden, enthalten große Mengen Harz und Fette, die zur Bildung von flüchtigen organischen Terpenverbindungen und Aldehyden führen. Teilweise entstehen diese Stoffe auch durch Abbau der Hauptbestandteile des Holzes, wie Lignin, Cellulose und Hemicellulose. VOCs und Aldehyde, wie Formaldehyd, können auch bei der Verwendung bestimmter Klebstoffe für die Herstellung der Holzwerkstoffe entstehen.

Es ist eine allgemein bekannte Tatsache, dass alle Holzwerkstoffe einschließlich Spanplatten, Faserplatten und OSB-Platten sowohl Formaldehyd als auch VOC und Aldehyde an die Raumluft abgeben. Wie bereits erwähnt, werden diese Emissionen sowohl durch einen chemischen Abbau innerhalb des Holzes als auch durch chemischen Abbau der verwendeten formaldehydhaltigen Klebstoffe verursacht. Bei den VOC-Emission liegen dagegen ausschließlich holzbedingte Freisetzungen vor, diese gliedern sich in sogenannte Primäremissionen von leicht flüchtigen Holzinhaltsstoffen, wie Terpenen oder chemischen Abbauprodukten, wie Essigsäure und sogenannten Sekundär- bzw. Tertiäremissionen, z.B. höhere Aldehyde, wie Pentanal oder höhere Carbonsäuren. Diese Abbauprodukte entstehen durch lang andauernde oxidative Prozesse von Holzinhaltsstoffen, wie Fettsäuren, aber auch Lignin, Cellulose und Hemicellulose.

Zu den Klebstoffen, wie sie derzeit in der Herstellung von Holzwerkstoffen, wie OSB-Platten, mitteldichte Faserplatten usw. verwendet werden, zählen Aminoplastklebstoffe, wie Harnstoff-Formaldehyd-Klebstoffe (UF-Klebstoffe), Melamin-Harnstoff-Phenol-Formaldehyd-Klebstoffe (MUPF-Klebstoffe) oder Melamin-Harnstoff-Formaldehyd-Klebstoffe (MUF-Klebstoffe). Weitere Klebstoffe, wie sie typischerweise bei Holzwerkstoffen eingesetzt werden, umfassen Klebstoffe auf Basis von Diisocyanaten (PMDI), Polyurethanklebstoffe, Phenol-Formaldehyd-Klebstoffe (PF-Klebstoffe) und/oder Tannin-Formaldehyd-Klebstoffe (TF-Klebstoffe) oder Gemische hiervon. Im Faserplattenbereich finden z.B. hauptsächlich Aminoplast-Klebstoffe Verwendung. Eine Freisetzung der VOCs und des Formaldehyds finden sowohl während der Herstellung der Holzwerkstoffe als auch nach deren Herstellung oder bei ihrer Anwendung statt. Bei der Faserplattenherstellung kann es z.B. bei der thermohydrolytischen Behandlung der lignocellulosehaltigen Materialien zu einem chemischen Teilabbau des Holzes kommen. Die dabei entstehenden, leicht flüchtigen Verbindungen, wie Aldehyde und Säuren, emittieren dann während des späteren Herstellungsverfahrens oder bei späterer Nutzung der hergestellten Holzwerkstoffe. Sie können ebenfalls einen negativen Einfluss auf die Verklebungsfestigkeit haben und somit die Eigenschaften der hergestellten Holzwerkstoffe negativ beeinflussen.

Aus den oben genannten Gründen war es die Aufgabe der vorliegenden Erfindung unter Nutzung chemischer Zusätze die VOC-Emission (insbesondere der Aldehyde) und bevorzugt auch die Formaldehyd-Emission von Holzwerkstoffen auf ein niedriges Niveau zu begrenzen. Dabei sollte so wenig wie möglich in den technologischen Prozess der Holzwerkstoffherstellung eingegriffen werden, um aufwendige technologische Anpassungen oder Umbaumaßnahmen zu vermeiden. Außerdem muss eine chemische Störung des Prozesses ebenso vermieden werden. Bei Verwendung der üblichen formaldehydhaltigen Klebstoffe findet deren Aushärtung unter hohen Temperaturen und hohem Druck statt. Weitere wichtige Kenngrößen sind der pH-Wert als Maß für die Anwesenheit von Säuren oder Basen und die Pufferkapazität der als Maß für den Widerstand gegen eine pH-Wert-Änderung (z.B. durch Härterzugabe). Eine Störung des notwendigen pH-Wertes, der sich z.B. bei sauer härtenden Aminoplast-Klebstoffen zwischen 5 und 6, oder bei alkalisch härtenden PF-Klebstoffen im Bereich von pH 8 bis 9, oder bei neutral härtenden PMDI-Klebstoffen im Bereich 6 bis 8 liegt und der vorhandenen Pufferkapazität soll daher möglichst vermieden werden. Des Weiteren ist eine Aufgabe der vorliegenden Erfindung die Emission von Aldeyden und VOC über den gesamten Zeitraum, das heißt während der Herstellung und der späteren, längeren Nutzung der hergestellten Holzwerkstoffe gering zu halten.

### Beschreibung der Erfindung

Die Aufgabe wird dadurch gelöst, dass eine spezielle Zusammensetzung den lignocellulosehaltigen Zerkleinerungsprodukten zugesetzt wird, um durch Umsetzung mit den VOCs und den Aldehyden, diese so zu verändern, dass sie nicht mehr aus den Zerkleinerungsprodukten bzw. aus den aus diesen Zerkleinerungsprodukten hergestellten Holzwerkstoffen emittieren. Die dabei entstehenden Verbindungen sind so hochmolekular, dass sie nicht mehr flüchtig sind und somit nicht mehr auch nicht mehr langfristig zu den VOC-Emissionen bzw. Aldehydemissionen beitragen.

Hierbei spielen, wie gesagt, auch der pH-Wert und die Pufferkapazität der Holzwerkstoffe eine wichtige Rolle. Es ist daher wichtig, nicht nur während der Behandlung, sondern auch im fertig gestellten Holzwerkstoff sowohl den pH-Wert als auch die Pufferkapazität auf entsprechende Werte zu halten, so dass eine möglichst geringe Umwandlung zu VOCs und Aldehyden während der Verwendung der Holzwerkstoffe auftritt. Der pH-Wert sollte dabei bevorzugt in einem Bereich von 5 bis 6 oder von 6 bis 9 eingestellt sein, je nach eingesetztem Klebstoff. D.h. z.B. in einem optimalen pH-Bereich, der durch die erfindungsgemäße Zugabe des Additivs bewahrt wird, ist nicht nur eine Verringerung der Emission der VOC möglich, sondern dieses System hat auch keine negativen Einflüsse auf die Verarbeitungsverfahren, wie eine Vorhärtung des Klebstoffs, eine ungenügende Aushärtung, eine mangelnde Verklebungsgüte etc., wie sie bei Änderungen des pH-Wertes auftreten.

Vorliegend wurde gefunden, dass bei Zugabe einer Kombination mit einer Pufferkapazität von mindestens jeweils zwei Komponenten, die aus zwei voneinander unterschiedlichen Gruppen i) bis ii), wie unten ausgeführt, ausgewählt sind, die beschriebenen Nachteile verringern bzw. begrenzen. Durch die Mischung können die pH-Werte und die Pufferkapazitäten auf ein technologisch sinnvolles Niveau gebracht werden, ohne dass es zu einer Störung des Produktionsprozesses oder einem späteren chemischen Abbau der Bestandteile der Holzwerkstoffe kommt. Im Gegensatz zum Stand der Technik, z.B. die WO 2007/012350, oder DE 101 60 316 bei der nur eine Komponente (Bisulfit) eingesetzt wird, was sowohl den pH-Wert als auch die Pufferkapazität der Bestandteile des fertigen Holzwerkstoffes als auch der Einzelbestandteile während der Produktion verändert, erlaubt diese Kombination von mindestens zwei Komponenten eine Begrenzung der Änderungen im pH-Wert und Pufferkapazität.

Die Verwendung jeweils einer Komponente oder von Mischungen, die den pH-Wert negativ beeinflussen, d.h. den pH-Wert so verschieben, dass der für den Klebstoff optimale pH-Wert-Bereich verlassen wird, als Fänger für VOCs und Aldehyde ist mit folgenden Nachteilen verbunden: Es besteht die Gefahr der Vorhärtung oder der Hemmung des verwendeten Klebstoffs vor dem eigentlichen Produktionsschritt des Verbindens, wie dem Heißpressen. Weiterhin besteht die Gefahr einer ungenügenden Aushärtung während des Heißpressens, insbesondere wenn eine Sulfitlösung mit alkalischen pH-Wert über 8 oder Bisulfitlösung mit einem sauren pH-Wert unter 5 zum Einsatz kommt. Schließlich besteht die Gefahr eines chemischen Abbaus des Klebstoffs und/oder von Holzbestandteilen und/oder Holzinhaltsstoffen durch Hydrolyse unter Einfluss von im Holzwerkstoff verbliebenen freien oder latenten Säuren und/oder Laugen.

Ein weiterer Nachteil der WO 2007/012350 ist die Beschränkung auf Faserplatten, da das Bisulfit vor dem Refiner den Hackschnitzeln zugesetzt wird, während die vorliegende Erfindung für alle Holzwerkstoffe zum Einsatz kommen kann. Ein weiterer Nachteil dieses Verfahrens ist die Einbringung im Refiner, da auf diese Weise die Verluste durch Verdampfen von SO₂ und durch das Abpresswasser besonders hoch sind. Während sich die WO 2007/012350 ausschließlich auf Formaldehyd bezieht, konnte überraschend festgestellt werden, dass sich durch den Einsatz von wenigstens zwei Komponenten, auch die Emissionen von flüchtigen organischen Verbindungen wirkungsvoll verringern lassen.

Im Gegensatz dazu erfolgt vorliegend die Zugabe des Additivs erst nach dem Zerkleinern der Zerkleinerungsprodukte, z.B. nach dem Refiner bei Fasern. Bevorzugt erfolgt das Aufbringen der Additive unmittelbar nach dem Einbringen des Klebstoffs. Die Additive dienen somit nicht dem Aufschließen des Holzes.

Durch Kombination mit einer Pufferkapazität von mindestens jeweils zwei Komponenten, die aus zwei voneinander unterschiedlichen Gruppen i) bis ii) ausgewählt sind, können diese Probleme verringert werden. Ein wesentlicher Vorteil der vorliegenden Erfindung ist daher die Stabilisierung des pH-Wertes und Beibehaltung der Pufferkapazität, um so die Emission von VOC und Aldehyden, wie Formaldehyd, zu verringern.

Die Gruppen i) bis iv) sind dabei die folgenden:
Die Gruppe i) umfasst Hydrogensulfitsalze, z. B. der allgemeinen Formel MeHSO₃ oder Me(HSO₃)₂, wobei Me ein Alkali-, Erdalkali- oder Ammoniumion darstellt, wie Natriumhydrogensulfit, Ammoniumhydrogensulfit, Lithiumhydrogensulfit, Kaliumhydrogensulfit, Kalziumhydrogensulfit, Magnesiumhydrogensulfit usw.

Bevorzugt wird als Hydrogensulfitsalz Natriumhydrogensulfit oder Ammoniumhydrogensulfit, insbesondere Ammoniumhydrogensulfit verwendet.

Verbindungen der Gruppe ii) Sulfitsalze umfassen Sulfitsalze, z. B. Verbindungen der allgemeinen Formel MeSO₃ oder Me(SO₃)₂, wobei Me ein Alkali-, Erdalkali- oder Ammoniumion darstellt und gegebenenfalls zwei Me-Ionen vorhanden sind, wie bei Alkali- oder Ammoniumsulfiten. Geeignete Sulfitsalze sind insbesondere Natriumsulfit, Kaliumsulfit, Magnesiumsulfit, Kalziumsulfit, Ammoniumsulfit, ganz besonders Ammoniumsulfit.

Diese Komponenten der Gruppen i) und ii), die Hydrogensulfitsalze und Sulfitsalze setzen sich z.B. schnell mit Aldehydverbindungen, wie Formaldehyd, unter Bildung von z.B. schwer löslichem von Formaldehydhydrogensulfit bzw. Formaldehydsulfit Additions-Verbindungen um. Hierdurch werden sehr effektiv und kurzfristig die Emissionen gesenkt. Außerdem haben die genannten Komponenten antioxidative Eigenschaften und können somit die VOC-Emissionen, die durch Oxidation verursacht werden, unterdrücken. Die Komponenten weisen des Weiteren puffernde Eigenschaften auf und ermöglich es, den pH-Wert des Holzwerkstoffs und auch den ausgehärteten Klebstoff zu stabilisieren und dadurch eine Hydrolyse sowohl des Holzwerkstoffes als auch des Klebstoffs zu vermeiden. Sulfit, wie auch Hydrogensulfitkomponenten, reagieren des Weiteren mit isolierten Doppelbindungen, wie sie z.B. in Terpenen, Fetten oder Fettsäuren enthalten sind, durch Reduktion bzw. Addition mit diesen Verbindungen.

In einer bevorzugten Ausführungsform wird bei dem erfindungsgemäßen Verfahren sowohl mindestens ein Hydrogensulfitsalz als auch mindestens ein Sulfitsalz den Zerkleinerungsprodukten zugesetzt. Bevorzugt handelt es sich bei den dabei verwendeten Salzen um Ammoniumhydrogensulfit und/oder Natriumhydrogensulfite bzw. Natriumsulfit und/oder Ammoniumsulfit. Ganz besonders bevorzugt ist die Verwendung einer Kombination von Ammoniumsulfit/Ammoniumhydrogensulfit.

Durch geeignete Kombination von Sulfit und Hydrogensulfit ist es möglich, den gewünschten pH-Wert zu erreichen und in diesem Bereich als Puffer zu wirken. Insbesondere sind daher z.B. äquimolare Mischungen der Sulfite/Hydrogensulfite vorteilhaft, um im neutralen Bereich eine Pufferkapazität aufzuzeigen. Besonders eine 1:1 Mischung von Ammoniumsulfit/Ammoniumhydrogensulfit zeigte sich besonders geeignet. Aber auch andere Kombinationen im Bereich zwischen 1:3 bis 3:1 sind anwendbar, insbesondere wenn dadurch ein für die weitere Prozessführung optimaler pH-Wert erreicht werden kann. Dies ist durch geeignete Messungen am verwendeten Klebstoff (z.B. Gelierzeitmessungen, Härtungszeitmessungen) im Vorfeld leicht durchführbar.

Die Gruppe iii) umfasst Harnstoff und Harnstoffderivate, wie Monomethylolharnstoff, Methylenharnstoff. Bevorzugt wird Harnstoff eingesetzt.

Harnstoff reagiert ebenfalls mit Formaldehyd unter Bildung von Mono- und Dimethylolharnstoff. Diese Umsetzung geschieht sehr langsam und erlaubt somit ein langfristiges Absenken des Formaldehydniveaus in den Holzwerkstoffen. Die Verwendung von Harnstoff alleine ist aber nicht sinnvoll, da die Umsetzung mit Formaldehyd sehr langsam erfolgt und es sich um eine Gleichgewichtsreaktion handelt, so dass Formaldehyd zu einem späteren Zeitpunkt auch wieder abgegeben werden kann.

In einer weiteren bevorzugten Ausführungsform wird eine Kombination aus einer Komponente der Gruppe iii) und mindestens einer Komponente aus den Gruppen i) und ii) den Zerkleinerungsprodukten im erfindungsgemäßen Verfahren zugesetzt. Aufgrund der unterschiedlichen Reaktionsweisen bzw. Reaktionszeiten der zugefügten Komponenten in Bezug auf Formaldehyd und VOC kann sowohl eine kurzfristig als auch langfristige Emission von VOC und Formaldehyd verändert und die Eigenschaften der Holzwerkstoffe dadurch optimiert werden.

Die Gruppe iv) umfasst Alkali-, Erdalkali- und Ammoniumhydroxide. Bevorzugt werden Natriumhydroxid und Ammoniumhydroxid verwendet. Weitere geeignete Hydroxide schließen Kaliumhydroxid, Magnesiumhydroxid, Kalziumhydroxid ein. Diese Hydroxidkomponente der Gruppe iv) wird in erster Linie zur Einstellung des pH-Wertes benötigt, kann aber den hydrolytischen Abbau von säurehärtenden Klebstoffen, wie UF-, MUF-, MUPF-Klebstoffen, verhindern. In bevorzugten Ausführungsformen werden den Zerkleinerungsprodukten mindestens jeweils einen Komponente aus den voneinander unterschiedlichen Gruppen i) und ii), Harnstoff und/oder Alkali-, Erdalkali- oder Ammoniumhydroxide zugesetzt. Hierdurch werden eine Optimierung der Pufferkapazitäten der erhaltenen Holzwerkstoffe und ein besonders geeigneter pH-Wert erzielt. Hierdurch werden Abbauprozesse der Holzwerkstoffe und der darin enthaltenden Bindemittel über die Zeit verringert.

Besonders bevorzugt wird eine Kombination eines Hydrogensulfitsalzes, eines Sulfitsalzes und gegebenenfalls von Harnstoff oder Harnstoffderivat eingesetzt.

Bevorzugt wird das mindestens eine Hydrogensulfitsalz in einer Menge von 0,1 Gew.-% bezogen auf atro Lignocellulose zugesetzt. Die Menge an Hydrogensulfitsalz ist bevorzugt 0,1 Gew.-% bis 5 Gew.-% bezogen auf atro Lignocellulose. Die Menge an Sulfitsalz ist ebenfalls mindestens 0,1 Gew.-% bezogen auf atro Lignocellulose, wie 0,1 Gew.-% bis 5 Gew.-%. Bevorzugt werden Mengen von jeweils 0,2 Gew.-% bis 1,5 Gew.-% Sulfit bzw. Hydrogensulfit eingesetzt, z.B. einer Mischung mit ca. 50 % Feststoffgehalt mit 1 % auf atro Holz dosiert. Die Menge an Harnstoff liegt bevorzugt im Bereich von 0,5 Gew.-% bis 5 Gew.-% bezogen auf atro Lignocellulose. Die Menge an Alkali-, Erdalkali- und Ammoniumhydroxid liegt bevorzugt im Bereich von 0,1 Gew.-% bis 3 Gew.-% bezogen auf atro Lignocellulose.

Die vorliegende Erfindung betrifft des Weiteren Zusammensetzungen, die im Folgenden auch als Fängerlösung bezeichnet wird, zur Behandlung von Holzwerkstoffen und zur Reduktion der Emission von flüchtigen organischen

Verbindungen (VOC) und davon erfasste Aldehyde, aber auch von Formaldehyd umfassend mindestens jeweils eine Komponente aus:
i) Hydrogensulfitsalz
ii) Sulfitsalz
gegebenenfalls mit dem weiteren Zusatz von mindestens einer Komponente an iii) und/oder iv):
iii) Harnstoff und Harnstoffderivate und
iv) Alkali-, Erdalkali- oder Ammoniumhydroxid.

Bevorzugt handelt es sich bei den Sulfit- bzw. Hydrogensulfitsalz um solche abgeleitet von Natrium und Ammoniak. Bei der Hydroxidverbindung handelt es sich bevorzugt um Natriumhydroxid.

Eine weitere bevorzugte Ausführungsform betrifft eine Zusammensetzung der oben genannten Art, bei der mindestens ein Hydrogensulfitsalz und Sulfitsalz in Kombination mit Harnstoff und/oder Harnstoffderivat verwendet wird.

Die Fängerlösung kann bei der Herstellung aller Holzwerkstoffe zum Einsatz kommen, wobei die Zugabe gemäß dem erfindungsgemäßen Verfahren zweckmäßigerweise über betriebsübliche Anlagen zur Bindemitteldosierung, wie Beleimtrommel, Blow-Line-Beleimung oder Trockenbeleimung erfolgt. Weiterhin ist erfindungsgemäß die Zugabe der Lösung zur Matte über Düsen direkt vor der Heißpresse möglich. Bevorzugt wird das Additiv nicht mit dem Klebstoff vermischt, sondern vor oder nach Aufbringen des Klebstoffs den Zerkleinerungsprodukten unmittelbar vor dem Heißpressen zugesetzt. Dabei ist es nicht nur auf formaldehydhaltige Klebstoffe beschränkt, sondern erstreckt sich auch auf alle anderen thermo- oder duroplastischen Klebstoffe, die bei Holzwerkstoffen zum Einsatz kommen, wie z.B. PMDI.

Besonders bevorzugt ist eine Zusammensetzung enthaltend
0 bis 90 Gew.-% Ammoniumsulfit
0 bis 90 Gew.-% Ammoniumhydrogensulfit
0 bis 90 Gew.-% Natriumhydrogensulfit
0 bis 90 Gew.-% Natriumsulfit
0 bis 90 Gew.-% Harnstoff
0 bis 10 Gew.-% Natriumhydroxid,
wobei die Komponenten aus den Gruppen i) und ii) in einer Menge von mindestens 0,1 Gew.-% vorhanden sind.

Schließlich stellt die vorliegende Erfindung Holzwerkstoffe erhältlich gemäß dem erfindungsgemäßen Verfahren bereit. Diese Holzwerkstoffe zeichnen sich durch eine verringerte Emission an flüchtigen organischen Verbindungen insbesondere den Aldehyden einschließlich Formaldehyd aus. Hierbei handelt es sich insbesondere um Faserplatten, wie HDF oder MDF, oder OSB-Platten.

Im Folgenden wird die Erfindung mit Hilfe von Beispielen näher erläutert, ohne dass sie auf diese beschränkt ist.

### Beispiel 1

### Herstellung von emissionsarmen HDF

Gemäß bekannten Verfahren wurden HDF-Platten hergestellt, wobei in den erfindungsgemäßen Holzwerkstoffen eine 1:1-Mischung von Ammoniumsulfitlösung (35 %ig) und Ammoniumhydrogensulfitlösung (70%ig, 45 % Anteil SO₂) direkt über eine separate Düse in der Blow-Line eindosiert wurde. In der Tabelle 1 sind die erhaltenen Werte für die Formaldehydabgabe bestimmt nach EN 120 bzw. EN 717-2 dargestellt.

**Tabelle 1**

| Probe / Zugabe Lösung bezogen auf atro Holz | Dicke | Formaldehydabgabe nach EN 120 | Gasanalyse nach EN 717-2 | Zugabe Harnstoff auf atro Holz |
|---|---|---|---|---|
| | mm | mg/100 g | mg/m2*h | % |
| 0/0% | 6,8 | 6,83 | 4,39 | 2,0 |
| 1/2,5% | 6,9 | 1,32 | 2,88 | 2,0 |
| 2/2,5% | 6,9 | 0,85 | 2,94 | 4,0 |

Wie man der Tabelle 1 entnehmen kann, verringern die Formaldehydwerte deutlich.

### Beispiel 2

### Herstellung von emissionsarmen Spanplatten

Gemäß bekannten Verfahren wurden Spanplatten hergestellt. Dabei wurde eine 1:1-Mischung von Ammoniumsulfitlösung (35 %ig) und Ammoniumhydrogensulfitlösung (70 %ig, 45 % Anteil SO₂) über eine separate Düse in die Beleimtrommel eindosiert. Dabei wurden 4 kg Lösung pro 100 kg Klebstoff eingesetzt. Weiterhin wurde Harnstoff in einer Menge von 0,5 Gew.-% auf atro Holz zugesetzt. Anschließend wurde die Formaldehydabgabe der Proben gemäß EN 120 bestimmt und mit der Desiccatormethode nach JIS A 5908 bestimmt.
In der Tabelle 2 sind die Werte dargestellt.

**Tabelle 2**

| Probe | Dicke | Formaldehydabgabe nach EN 120 | Desiccatorwert nach JIS A 5908 |
|---|---|---|---|
| | mm | mg/100 g | mg/L |
| ohne Zugabe | 17,1 | 5,43 | 1,59 |
| mit Zugabe | 17,1 | 3,33 | 1,16 |

Aus der Tabelle 2 wird deutlich, dass die Formaldehydabgabe drastisch reduziert werden kann.

### Beispiel 3

### Herstellung von emissionsarmen OSB

Gemäß bekannten Verfahren wurden OSB-Platten hergestellt, wobei in den erfindungsgemäßen Holzwerkstoffen eine 1:1-Mischung von Ammoniumsulfitlösung (35 %ig) und Ammoniumhydrogensulfitlösung (70 %ig) in einer Menge von 1 % auf atro Holz den Zerkleinerungsprodukten zudosiert wurde. Diese Lösung wurde über die Beleimungsschicht (Fa. Coil, Canada) sowohl den Strands der Deckschicht als auch den Strands der Mittelschicht zugegeben. Der Klebstoff für die Deckschicht (MUPF-Klebstoff) und der Klebstoff für die Mittelschicht (PMDI) wurde über separate Düsen dosiert.

In der Tabelle 3 sind die erhaltenen Werte für die Aldehydabgabe bestimmt nach DIN EN ISO 16000 dargestellt.

Im Vergleich dazu sind in der Tabelle 4 die Ergebnisse einer Kontrollplatte, die nicht mit der erfindungsgemäßen Zusammensetzung behandelt wurde, dargestellt.

**Tabelle 3**

| **Ergebnisse der Aldehyd-Bestimmung von der erfndungsgemäßen OSB-Platte** | | | | |
|---|---|---|---|---|
| Substanz | Konzentration in µg/m3 | | Bestimmungsgrenze | |
| | 3d | 7d | 28d | |
| Formaldehyd | 2,9 | 3,1 | 2,9 | 0,1 |
| Acetaldehyd | 6,9 | 9,1 | 5,7 | 0,1 |
| Propanal | 1,0 | 1,0 | 1,0 | 0,2 |
| Butanal | <0,2 | <0,2 | <0,2 | 0,2 |

**Tabelle 4**

| **Ergebnisse der Aldehyd-Bestimmung von der Referenzprobe** | | | | |
|---|---|---|---|---|
| Substanz | Konzentration in µg/m3 | | Bestimmungsgrenze | |
| | 3d | 7d | 28d | |
| Formaldehyd | 21,3 | 18,3 | 13,6 | 0,1 |
| Acetaldehyd | <0,1 | 31,0 | 26,3 | 0,1 |
| Propanal | 18,0 | 19,7 | 13,1 | 0,2 |
| Butanal | 4,7 | 5,5 | 5,1 | 0,2 |

Bei dem Vergleich der Gesamtmenge an VOC über einen Zeitraum von 28 Tagen wurden die folgenden Werte erhalten:

**Tabelle 5**

| | Konzentration in µg/m² | | |
|---|---|---|---|
| | 3d | 7d | 28d |
| OSB-Platte | 3362 | 1652 | 512 |
| Referenzprobe | 3468 | 1984 | 986 |

Wie aus den Beispielen deutlich wird, ist es erfindungsgemäß möglich, die Emissionen von VOC aber auch die Formaldehydemissionen deutlich mit Hilfe der erfindungsgemäßen Zusammensetzung zu verringern. Die so erhaltenen Holzwerkstoffe zeichnen sich im späteren Gebrauch durch verringerte VOC-Emissionen aus und hier insbesondere durch verringerte Aldehydemission. Aber auch die Formaldehydemission ist verringert.

## Patentansprüche

1. Verwendung einer Kombination mit einer Pufferkapazität von mindestens jeweils einer Komponente, die aus i) bis ii) ausgewählt ist, gegebenenfalls unter weiterer Zugabe von mindestens einer Komponente aus der Gruppe iii) und iv), wobei die Gruppe i) bis iv) sind:
i) Hydrogensulfitsalze,
ii) Sulfitsalze,
iii) Harnstoffe oder Harnstoffderivate,
iv) Alkali-, Erdalkali- oder Ammoniumhydroxide,
zur Verminderung der Emission von flüchtigen organischen Verbindungen (VOC) und Formaldehyd, bei der Herstellung von Holzwerkstoffen aus Lignocellulose, wobei diese Holzwerkstoffe hergestellt wurden durch:
- Bereitstellen von lignozellulosehaltigen Zerkleinerungsprodukten;
- Bereitstellen von Klebstoff;
- Mischen der lignozellulosehaltigen Zerkleinerungsprodukte mit Klebstoff und Verpressen der Mischung unter Wärmebehandlung,
wobei die Kombination zur Verminderung der Emission von flüchtigen organischen Verbindungen und Formaldehyd den Zerkleinerungsprodukten vor dem Verpressen und nach dem Zerfasern oder Zerspanen hinzugefügt wird.

2. Verwendung nach Anspruch 1, **dadurch gekennzeichnet, dass** den Zerkleinerungsprodukten vor dem Verpressen eine Kombination von mindestens jeweils einer Komponente aus den Gruppen i) Hydrogensulfitsalze und ii) Sulfitsalze in Verbindung mit mindestens einer Komponente aus iii) Harnstoffe oder Harnstoffderivate zugesetzt wird.

3. Verwendung nach einem der Ansprüche 1 bis 2, **dadurch gekennzeichnet, dass** die Holzwerkstoffe solche sind, hergestellt aus Holzspänen, Holzstrands und Holzfasern.

4. Verwendung nach einem der Ansprüche 1 bis 3, wobei die Holzwerkstoffe Holzplatten sind, insbesondere Spanplatten, Faserplatten, wie MDF-Platten und OSB-Platten.

5. Verwendung nach einem der Ansprüche 1 bis 4, **dadurch gekennzeichnet, dass** als Hydrogensulfitsalz Ammoniumhydrogensulfit und/oder Natriumhydrogensulfit zugesetzt werden und als Sulfitsalz Natriumsulfit und/oder Ammoniumsulfit zugesetzt werden.

6. Verwendung nach einem der Ansprüche 1 bis 5, **dadurch gekennzeichnet, dass** eine Kombination von Ammoniumhydrogensulfit und Ammoniumsulfit mit einem pH-Wert im Bereich von 5 bis 9, bei Verwendung von Aminoplast-Klebstoffen bevorzugt von 6 bis 8 zugesetzt wird.

7. Verwendung nach einem der vorherigen Ansprüche, wobei die Menge an Sulfitsalz 0,1 Gew.-% bis 5 Gew.-% Feststoff bezogen auf atro Lignocellulose ist.

8. Verwendung nach einem der vorherigen Ansprüche, wobei die Menge an Hydrogensulfitsalz 0,1 Gew.-% bis 5 Gew.-% Feststoff bezogen auf atro Lignocellulose ist.

9. Verwendung nach einem der vorherigen Ansprüche, wobei die Menge an Harnstoff 0,5 Gew.-% bis 5 Gew.-% Feststoff bezogen auf atro Lignocellulose ist.

10. Verwendung nach einem der vorherigen Ansprüche, wobei die Menge an Alkali-, Erdalkali- und Ammoniumhydroxid 0,1 Gew.-% bis 3 Gew.-% Feststoff bezogen auf atro Lignocellulose ist.

11. Holzwerkstoff erhältlich unter Verwendung gemäß einem der Ansprüche 1 bis 10, bei dem es sich bevorzugt um
i) Faserplatten, insbesondere HDF- und MDF-Platten handelt,
ii) Spanplatten handelt, oder
iii) OSB-Platten handelt.

## Claims

1. Use of a combination of at least in each case one component which are selected from i) and ii), having a buffer capacity, optionally with further addition of at least one component from the groups iii) and iv), the groups i) to iv) being:
i) hydrogen sulfite salts,
ii) sulfite salts,
iii) ureas or urea derivatives,
iv) alkali metal, alkaline earth metal or ammonium hydroxides,
for reducing the emission of volatile organic compounds (VOC) and formaldehyde, in the process for the production of wood-base materials from lignocellulose, whereby these wood-base materials are produced by
- provision of lignocellulose-containing comminution products;
- provision of adhesive;
- mixing of the lignocellulose-containing comminution products with the adhesive and pressing of the mixture with heat treatment, whereby the combination for reducing the emission of volatile organic compounds and formaldehyde is added to the comminution products before the pressing and after defibration or chipping.

2. The use according to claim 1, **characterized in that** a combination of at least in each case one component from the groups i) hydrogen sulfite salts and iii) sulfite salts together with at least one component from iii) ureas or urea derivatives is added to the comminution products before the pressing.

3. The use according to claim 1 or 2 **characterized in that** the wood-base materials are produced from wood chips, wood strands and wood fibres.

4. The use according to anyone of claims 1 to 3, whereby the wood-base materials are wood boards, in particular, particle boards, fiber boards, such as MDF boards, and OSB boards.

5. The use according to anyone of claims 1 to 4, **characterized in that** ammonium hydrogen sulfite and/or sodium hydrogen sulfite are added as the hydrogen sulfite salt and sodium sulfite and/or ammonium sulfite are added as the sulfite salt.

6. The use according to anyone of claims 1 to 5, **characterized in that** the combination of ammonium hydrogen sulfite and ammonium sulfite having a pH in the range from 5 to 9, in case of using Aminoplast adhesives, preferably from 6 to 8, is added.

7. The use according to anyone of preceding claims, wherein the amount of sulfite salt is of from 0.1% by weight to 5% by weight of solid, based on absolutely dry lignocellulose.

8. The use according to anyone of the preceding claims wherein the amount of hydrogen sulfite salt is of from 0.1 % to 5% by weight of solid, based on absolutely dry lignocellulose.

9. The use according to anyone of the preceding claims wherein the amount of urea is of from 0.5% by weight to 5% by weight of solid, based on absolutely dry lignocellulose.

10. The use according to anyone of the preceding claims, whereby the amount of alkali metal, alkaline earth metal or ammonium hydroxide is of from 0.1% by weight to 3% by weight of solid, based on absolutely dry lignocellulose.

11. A wood-base material obtainable by the use according to anyone of claims 1 to 10, wherein said wood-base material is preferably
i) fiber boards, in particular, HDF and MDF boards,
ii) particle boards, or
iii) OSB boards.

## Revendications

1. Utilisation d'une combinaison à capacité tampon d'à chaque fois au moins un composant choisi parmi i) à ii), éventuellement avec ajout supplémentaire d'au moins un composant des groupes iii) et iv), les groupes i) à iv) étant :
i) les sels d'hydrogénosulfite,
ii) les sels de sulfite,
iii) les urées ou les dérivés d'urée,
iv) les hydroxydes alcalins, alcalino-terreux ou d'ammonium,
pour réduire les émissions de composés organiques volatils (COV) et de formaldéhyde, lors de la fabrication de matériaux dérivés du bois à base de lignocellulose, ces matériaux dérivés du bois étant fabriqués par :
- préparation de produits de broyage contenant de la lignocellulose ;
- préparation d'un adhésif ;
- mélange des produits de broyage contenant de la lignocellulose avec l'adhésif et compression du mélange avec traitement thermique,
la combinaison pour réduire les émissions de composés organiques volatils et de formaldéhyde étant ajoutée aux produits de broyage avant la compression et après la mise en fibres ou la mise en copeaux.

2. Utilisation selon la revendication 1, **caractérisée en ce qu'**une combinaison d'à chaque fois au moins un composant des groupes i) sels d'hydrogénosulfite et ii) sels de sulfite en combinaison avec au moins un composant de iii) urées ou dérivés d'urée est ajoutée aux produits de broyage avant la compression.

3. Utilisation selon l'une quelconque des revendications 1 à 2, **caractérisée en ce que** les matériaux dérivés du bois sont des matériaux fabriqués à partir de copeaux de bois, de fils de bois et de fibres de bois.

4. Utilisation selon l'une quelconque des revendications 1 à 3, dans laquelle les matériaux dérivés du bois sont des panneaux de bois, notamment des panneaux de particules, des panneaux de fibres, tels que des panneaux MDF et des panneaux OSB.

5. Utilisation selon l'une quelconque des revendications 1 à 4, **caractérisée en ce que** de l'hydrogénosulfite d'ammonium et/ou de l'hydrogénosulfite de sodium sont ajoutés en tant que sel d'hydrogénosulfite et du sulfite de sodium et/ou du sulfite d'ammonium sont ajoutés en tant que sel de sulfite.

6. Utilisation selon l'une quelconque des revendications 1 à 5, **caractérisée en ce qu'**une combinaison d'hydrogénosulfite d'ammonium et de sulfite d'ammonium d'un pH dans la plage allant de 5 à 9, de préférence de 6 à 8 lors de l'utilisation d'adhésifs aminoplastes, est ajoutée.

7. Utilisation selon l'une quelconque des revendications précédentes, dans laquelle la quantité de sel de sulfite est de 0,1 % en poids à 5 % en poids de solide par rapport à la lignocellulose absolument sèche.

8. Utilisation selon l'une quelconque des revendications précédentes, dans laquelle la quantité de sel d'hydrogénosulfite est de 0,1 % en poids à 5 % en poids de solide par rapport à la lignocellulose absolument sèche.

9. Utilisation selon l'une quelconque des revendications précédentes, dans laquelle la quantité d'urée est de 0,5 % en poids à 5 % en poids de solide par rapport à la lignocellulose absolument sèche.

10. Utilisation selon l'une quelconque des revendications précédentes, dans laquelle la quantité d'hydroxyde alcalin, alcalino-terreux et d'ammonium est de 0,1 % en poids à 3 % en poids de solide par rapport à la lignocellulose absolument sèche.

11. Matériau dérivé du bois pouvant être obtenu par l'utilisation selon l'une quelconque des revendications 1 à 10, qui consiste de préférence en
i) des panneaux de fibres, notamment des panneaux HDF et MDF,
ii) des panneaux de particules ou
iii) des panneaux OSB.
